# EUROPEAN PATENT APPLICATION

(11) **EP 2 204 737 A1**
(43) Date of publication of application: **07.07.2010**
(21) Application number: 08800757.0
(22) Date of filing: 02.09.2008
(51) Int. Cl.: G06F 11/30

(54) **METHOD, DEVICE AND SYSTEM FOR REALIZING DIGITAL RIGHTS MANAGEMENT SERVICE UNDER BROADCAST ENVIRONMENT**

(30) Priority: 17.09.2007 CN 200710154636
(71) Applicant: Huawei Technologies Co., Ltd., Longgang District, Shenzhen Guangdong 518129 (CN)
(72) Inventor: ZHOU, Zhipeng, Shenzhen Guangdong 518129 (CN)
(74) Representative: Barth, Stephan Manuel
(86) International application number: PCT/CN2008/072245
(87) International publication number: WO 2009/039748

(57) **Abstract**

A method, a communicating device and a system for realizing a digital rights management (DRM) service under a broadcast environment are provided. The method includes receiving a Transport Stream transmitted through a broadcast channel, in which the Transport Stream is encapsulated with DRM service information; extracting the DRM service information from the Transport Stream; and executing a corresponding DRM service operation according to the DRM service information.

## Description

### FIELD OF THE TECHNOLOGY

The present invention relates to the field of digital rights management (DRM) technology, and more particularly to a method, a device, and a system for realizing a DRM service under a broadcast environment.

### BACKGROUND OF THE INVENTION

The DRM controls the use of digital contents mainly through rights and content protection solutions, so as to protect legal rights and interests of the content owner. After a content issuer (CI) of the digital contents encrypts the digital content, the subscriber downloads the encrypted digital content data packet to a terminal. A rights issuer (RI) distributes a license corresponding to the digital content, and the license has a content decryption key and corresponding rights encapsulated therein. The purchased digital content can be normally used only when the device owns the content data packet and the license at the same time. The legal DRM agent may parse the content decryption key to decrypt the digital content, and controls the particular use of the digital content according to the rights information in the license.

In the existing DRM system, the concept of domain is introduced. The device joining the domain may use the domain rights object (RO) purchased for the domain. The domain RO is encapsulated with the content decryption key of the digital content. During the process of joining the domain, the device of the domain obtains the domain key of the domain, so as to parse the domain RO and obtain the content decryption key therein.

At present, the device applies to the RI for joining the domain through a "join domain request" message, and after accepting the "join domain request" of the device, the RI carries the domain key corresponding to the domain in a "join domain response" message returned to the device, such that the device completes the procedure of joining the domain.

However, the existing Motion Picture Experts Group (MPEG) system widely applied to the digital broadcast application, such as a digital television set, does not realize the DRM function.

In the broadcast profile of the existing Audio Video coding Standard (AVS) DRM technique, only the method for transmitting the rights information exists, but the realizing of the DRM service under the broadcast environment is not supported, particularly, the relevant technique of the domain of the DRM under the broadcast environment is not concerned currently. Therefore, various DRM services can not be realized under the broadcast environment.

### SUMMARY OF THE INVENTION

The present invention is directed to a method, a device, and a method for realizing a DRM service under a broadcast environment, which are capable of realizing various DRM services under a broadcast communication environment.

In an embodiment, the present invention provides a method for realizing a DRM service under a broadcast environment, which includes the following steps.

A Transport Stream transmitted through a broadcast channel is received, in which the Transport Stream is encapsulated with DRM service information.

The DRM service information is extracted from the Transport Stream.

A corresponding DRM service operation is executed according to the DRM service information.

In an embodiment, the present invention further provides a method for realizing a DRM service under a broadcast environment, which includes the following steps.

DRM service information is encapsulated in a Transport Stream.

The Transport Stream is transmitted through a broadcast channel.

In an embodiment, the present invention further provides a method for realizing a DRM service under a broadcast environment, which includes the following steps.

A server encapsulates a Transport Stream with DRM service information, and sends the Transport Stream to a terminal through a broadcast channel.

The terminal receives the Transport Stream, and extracts the DRM service information from the Transport Stream.

The terminal executes a corresponding DRM service operation according to the DRM service information.

In an embodiment, the present invention further provides a communication device, which includes a receiving module, an extraction module, and an execution module.

The receiving module is adapted to receive a Transport Stream transmitted through a broadcast channel, in which the Transport Stream is encapsulated with DRM service information.

The extraction module is adapted to extract the DRM service information from the Transport Stream.

The execution module is adapted to execute a corresponding DRM service operation according to the DRM service information.

In an embodiment, the present invention further includes a communication device, which includes an encapsulation module and a sending module.

The encapsulation module is adapted to encapsulate a Transport Stream with DRM service information.

The sending module is adapted to transmit the Transport Stream through a broadcast channel.

In an embodiment, the present invention further provides a communication system, which includes a server and a terminal.

The server is adapted to encapsulate a Transport Stream with DRM service information, and send the Transport Stream through a broadcast channel.

The terminal is adapted to receive the Transport Stream, and extract the DRM service information from the Transport Stream, and is also adapted to execute a corresponding DRM service operation according to the DRM service information.

In the present invention, the server encapsulates the Transport Stream with the DRM service information, and sends the Transport Stream to the terminal through the broadcast channel. The terminal receives the Transport Stream, and extracts the DRM service information from the Transport Stream. The terminal executes the corresponding DRM service operation according to the DRM service information. Therefore, various DRM services are realized under the broadcast communication environment, and more service selections are brought to operators and consumers.

### BRIEF DESCRIPTION OF THE DRAWINGS

FIG. 1 is a flow chart of processes of realizing a DRM service under a broadcast environment by a server according to an embodiment of the present invention;
FIG. 2 is a flow chart of processes of realizing a DRM service under a broadcast environment by a terminal according to an embodiment of the present invention;
FIG. 3 is a flow chart of an example of realizing a DRM service under a broadcast environment according to an embodiment of the present invention;
FIG. 4 is a flow chart of an example in which a server notifies a relevant terminal to execute a domain updating operation according to an embodiment of the present invention;
FIG. 5 is a schematic structural view of a communication device according to an embodiment of the present invention;
FIG. 6 is a schematic structural view of another communication device according to an embodiment of the present invention;
FIG. 7 is a schematic structural view of a communication system according to an embodiment of the present invention; and
FIG. 8 is a schematic structural view of a communication system in an example according to an embodiment of the present invention.

### DETAILED DESCRIPTION OF THE EMBODIMENTS

The present invention is described in detail with reference to accompanying drawings.

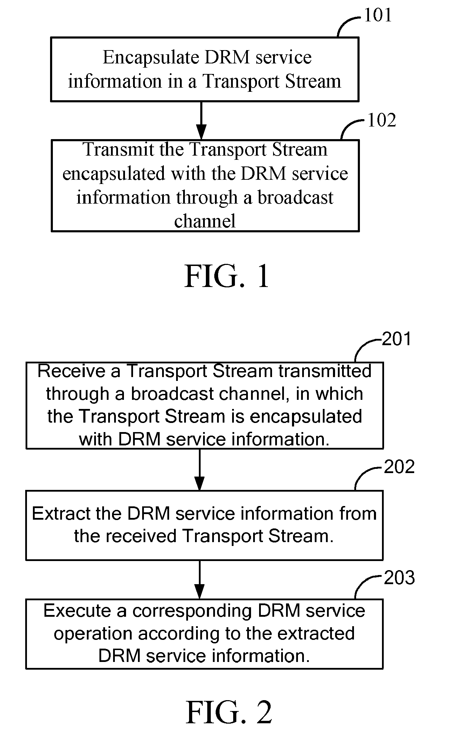

Referring to FIG. 1, in an embodiment of the present invention, a process of realizing a DRM service under a broadcast environment by a server is described in the following.

In Step 101, DRM service information is encapsulated in a Transport Stream.

In Step 102, the Transport Stream encapsulated with the DRM service information is transmitted through a broadcast channel.

Referring to FIG. 2, in an embodiment of the present invention, a process of realizing a DRM service under a broadcast environment by a terminal is described in the following.

In Step 201, a Transport Stream transmitted through a broadcast channel is received, in which the Transport Stream is encapsulated with DRM service information.

In Step 202, the DRM service information is extracted from the received Transport Stream.

In Step 203, a corresponding DRM service operation is executed according to the extracted DRM service information.

The DRM service information includes one selected from a group consisting of registration information, "join domain" information, "leave domain" information, "domain updating" information, "license request" information, and any combination thereof. Correspondingly, the DRM service operation includes one selected from a group consisting of registration, join domain, leave domain, domain updating, license requests, and any combination thereof.

In an embodiment, for the Transport Stream transmitted through the broadcast channel, a packet carried in the Transport Stream is encapsulated with the DRM service information. Referring to a control information structure defined in the broadcast profile of AVS DRM, a new AVSDRM_control_info_class is designed, and the structure is as shown in Table 4.

**Table 4 Structure of AVSDRM_-control_info_class**

| Syntax | | Number of Bits | Mnemonic |
|---|---|---|---|
| AVSDRM_ServiceMessage_Container () { | | | |
| | Control_info_class_tag | 8 | uimsbf |
| | Serial_num | 8 | uimsbf |
| | Length | 16 | uimsbf |
| | MessageData | | ByteArray |
| } | | | |

AVSDRM_ServiceMessage_Container () is the syntax definition of the control information of this type. Particularly, the Control_info_class_tag field represents a label of the control information, Length represents the number of bytes of the AVS DRM unit container right after the field, and MessageData represents the particular message information.

A new label value needs to be assigned to the newly designed control information. For example, an assigned value of the Control_info_class_tag in the structure of the AVSDRM_DomainMessage_Container is defined to 0X04.

MessageData is the carried DRM message information, and is particularly a "join domain response" message ("domain registration response" message), a "domain updating response" message, a "leave domain response" message, and so on.

In the application, the particular message format definition may refer to the definition of the DRM service message in existing standards.

After receiving the DRM service message, the terminal executes the corresponding subsequent DRM service operation according to the particular message.

Two methods are used to differentiate different types of message information. In one method, a message type identifier is disposed in a message body, the DRM service information includes a type identifier, and the type identifier indicates the DRM service operation corresponding to the DRM service information. In the other method, the message body contains a message name, the DRM service information includes a DRM service name, and the DRM service name indicates the DRM service operation corresponding to the DRM service information.

In one possible situation, the size of each section is limited, and the size of the DRM information may exceed the limit of the size of one section. Therefore, a serial number Serial_num field may be set in AVSDRM_DomainMessage_Container, and an initial value of the field value to each piece of DRM information is 0. If the DRM information is divided into a plurality of parts and is carried by a plurality of AVSDRM_DomainMessage_Containers, the field value of the Serial_num of each part is increased by 1 in sequence.

In an embodiment, the DRM service information is encapsulated in the DRM information stream, and the DRM information stream is multiplexed in the Transport Stream, for example, the DRM information stream, a key stream, and a media stream are multiplexed to generate the Transport Stream. The DRM information stream includes stream identifier information, and the terminal may extract the DRM service information from the Transport Stream according to the stream identifier information.

An example is described in the following.

It is assumed that a terminal of a subscriber is in an MPEG broadcast system. The subscriber requests to join one terminal to a certain domain. After passing the "join domain" request of the terminal, a server sends a "join domain response message" to the terminal. After the terminal receives the "join domain" response, the subscriber orders a license of a film from the server, which is a domain license. The domain license is encapsulated with a content key and rights information. The server sends the domain license ordered by the terminal to the terminal.

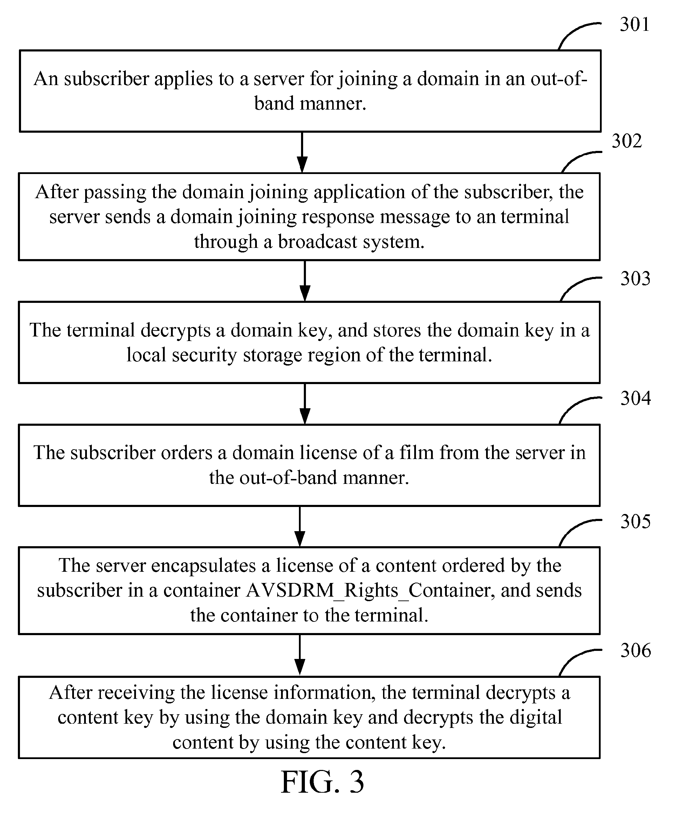

Referring to FIG. 3, in the example, the process of realizing the DRM service under the broadcast environment is described in the following.

In Step 301, the agent subscriber applies to the server for joining the domain in an out-of-band manner.

In Step 302, after passing the domain joining application of the subscriber, the server sends the "join domain response" message to the terminal through the broadcast system. Particularly, the DRM information stream is encapsulated with the domain response message, then the DRM information stream, the key stream, and the media stream are multiplexed in the Transport Stream, and the Transport Stream is transmitted to the terminal through the broadcast channel.

Particularly, the "join domain response" message adopts a domain registration response message defined by XBS, and the definition is as shown in Table 5.

**Table 5 Domain Registration Response Message**

| domain_registration_response() | | |
|---|---|---|
| Parameter name | (M)andatory / (O)ptional | remark |
| message_tag | M | global, not encrypted |
| protocol_version | M | global, not encrypted |
| longform_udn | M | global, not encrypted |
| device_nonce | M | device specific, not encrypted |
| status | M | device specific, not encrypted |
| time_stamp_flag | M | device specific, not encrypted |
| certificate_version | M | global, not encrypted |
| ri_certificate_counter | M | global, not encrypted |
| c_length | M | global, not encrypted |
| ri_certificate | M | global, not encrypted |
| ocsp_response_counter | M | global, not encrypted |
| r_length | M | global, not encrypted |
| ocsp_response | M | global, not encrypted |
| domain_timestamp_start | O | device specific, not encrypted |
| domain_timestamp_end | O | device specific, not encrypted |
| signature_type_flag | M | global, not encrypted |
| keyset_block_length | M | device specific, not encrypted |
| local_domain_key | M | device specific, encrypted |
| longform_domain_id() | O | device specific, encrypted |
| shortform_domain_id | M | device specific, encrypted |
| signature_block | M | device specific, not encrypted |

The semantics of the domain registration response message is defined in Table 6.

**Table 6 Domain Registration Response Message**

| **fields** | | | **length** | **type** |
|---|---|---|---|---|
| domain_registration_response() { | | | | |
| | /* signature protected part starts here */ | | | |
| | /* message header starts here /* | | | |
| | message_tag | | 8 | bslbf |
| | protocol_version | | 4 | bslbf |
| | reserved_for_future_use | | 4 | bslbf |
| | unique_device_number | | 80 | bslbf |
| | | reserved_for_future_use | 4 | bslbf |
| | device_nonce | | 4 | bslbf |
| | Status | | 8 | bslbf |
| | flags { | | | |
| | | ri_certificate_counter | 3 | bslbf |
| | | ocsp_response_counter | 3 | bslbf |
| | | signature_type_flag | 2 | bslbf |
| | | time_stamp_flag | 1 | bslbf |
| | | reserved for future use | 7 | bslbf |
| | | keyset_block_length | 16 | uimsbf |
| | } | | | |
| | certificate_version | | 8 | bslbf |
| | for(cnt1=0; cnt1 < ri_certificate_counter; | | | |
| | | cnt1++){ | | |
| | | c_length | 16 | uimsbf |
| | | ri_certificate() | 8*c_length | bslbf |
| | } | | | |
| | for(cnt2=0; cnt2 < ocsp_response_counter; | | | |
| | | cnt2++){ | | |
| | | r_length | 16 | uimsbf |
| | | ocsp_response() | 8*r_length | bslbf |
| | } | | | |
| | if (time_stamp_flag == 0x1) { | | | |
| | | domain_timestamp_start | 40 | mjdutc |
| | | domain_timestamp_end | 40 | mjdutc |
| | } | | | |
| | /* message header ends here /* | | | |
| | if (signature_type_flag == 0x0) { | | | |
| | | sessionkey_block() | 1024 | bslbf |
| | } else if (signature_type_flag ==0x1) | | | |
| | | sessionkey_block() | 2048 | bslbf |
| | } else if (signature_type_flag ==0x2) | | | |
| | | sessionkey_block() | 4096 | bslbf |
| | } | | | |
| | /* signature protected part ends here */ | | | |
| | if (signature_type_flag == 0x0) | | | |
| | | signature_block | 1024 | bslbf |
| | } else if (signature_type_flag == 0x1) | | | |
| | | signature_block | 2048 | bslbf |
| | } else if (signature_type_flag ==0x2) | | | |
| | | signature_block | 4096 | bslbf |
| | } | | | |
| } | | | | |

Each field in the domain registration response message is explained in the following.

In XBS, a field value of the message_tag field in the domain registration response message is set to 0x02.

The protocol_version field represents version information of the message, and the version of the current XBS message is set to 0x0.

The domain_timestamp_start field and the domain_timestamp_end field represent start time and end time of a validity period of the domain.

The signature_type_flag field represents a type of a signature algorithm, and currently three types being RSA 1024, RSA 2048, and RSA 4096 are defined, which are respectively set to 0x0, 0x1, and 0x2.

The local_domain_key field represents a domain key of an OMA DRM domain.

Domain relevant information (including the domain key) is encapsulated in the sessionkey_block and is protected by encryption, and only the device private key having the legal device may parse the encrypted domain relevant information.

The signature_block is encapsulated with a digital signature of the server on the message.

In Step 303, after the terminal receives the domain registration response message and passes a verification on the digital signature of the message, the terminal decrypts the domain key in sessionkey_block by using the device private key, and stores the domain key in a local security storage region of the terminal.

In Step 304, the subscriber orders a domain license of a film from the server in the out-of-band manner.

In Step 305, the server encapsulates the license of the content ordered by the subscriber into a container AVSDRM_Rights_Container, and sends the container to the terminal. The RightsData field is domain license information, and is encapsulated with a permitted using rights, the content decryption key, and other information.

In Step 306, after receiving the license information, the terminal decrypts the content key by using the domain key, and decrypts the digital content by using the content key. The media stream of the film is demultiplexed, and then a plain text of the film data is decrypted, so as to play the film by a media player.

In an embodiment, in the broadcast system, when the relevant data is broadcasted, the terminal is not always ON, such that the server may continuously send the same DRM service information repeatedly. After receiving the DRM service information, the terminal needs to judge whether the information is already received (for example, according to the AVSDRM_control_info_version field). If the same information is already received, the information is discarded, and otherwise, the information is processed correspondingly.

In addition, if the terminal does not receive the corresponding information, for example, does not receive the "join domain response" to the terminal in a quite long time, the subscriber may notify the server to send the relevant information to the terminal in the out-of-band manner.

The license information may also be carried in the DRM service message as the data in sessionkey_block, and transmitted to the terminal.

In the embodiment, various types of DRM service information are directly encapsulated into the AVSDRM_Control_Info_section() structure of the DRM information stream. In another embodiment, different DRM information is respectively encapsulated to different streams. The DRM information stream includes the stream identifier information, and each DRM information stream carrying the different DRM service information owns a different stream identifier. The identifier information stream is multiplexed in the Transport Stream, the identifier information stream includes stream identifier information and/or description information of the DRM information stream, and the terminal extracts the stream identifier information and/or the description information from the identifier information stream, and extracts the DRM service information from the Transport Stream according to the stream identifier information and/or the description information.

In an embodiment, the terminal extracts corresponding packet element stream (PES) packet information or table information from the Transport Stream according to the stream identifier, and extracts the DRM service information from the PES packet information or the table information.

For example, a DRM control table is designed, and the stream identifiers of different DRM information streams are recorded in the table. All the information of the DRM control table forms a separate stream, and the separate stream is multiplexed in the Transport Stream for transmission. Alternatively, in the existing types of information, for example, the stream identifier information of the different DRM information streams is recorded in a program map table (PMT). The terminal extracts the corresponding DRM service information from the Transport Stream according to the stream identifier information of each DRM information stream in the DRM control table (or PMT). In the following, illustration is made by taking designing new information of the DRM control table as an example.

A packet identifier (PID) value of the information of the DRM control table may be defined in the PMT, or may be set to a certain fixed value. The syntax of the DRM control table may be defined in Table 7.

**Table 7 Syntax of DRM Control Table**

| Syntax | | | Number of Bits | Mnemonic |
|---|---|---|---|---|
| DRM_Info_section() { | | | | |
| | table_id | | 8 | Uimsbf |
| | Section_syntax_indicator | | 1 | Bslbf |
| | '0' | | 1 | Bslbf |
| | Reserved | | 2 | Bslbf |
| | Section_length | | 12 | Uimsbf |
| | Reserved | | 2 | Bslbf |
| | version_number | | 5 | Uimsbf |
| | Current_next_indicator | | 1 | Bslbf |
| | Section_number | | 8 | uimsbf |
| | last_section_number | | 8 | uimsbf |
| | DRM_info_length | | 12 | uimsbf |
| | for (i=0;i<N;i++) { | | | |
| | | descriptor() | | |
| | | } | | |
| | for (i=0;i<N1;i++) { | | | |
| | | stream_type | 8 | uimsbf |
| | | reserved | 3 | bslbf |
| | | elementary_PID | 13 | uimsbf |
| | | reserved | 4 | bsllbf |
| | | DRM_CLASS_info_length | 12 | uimsbf |
| | | for (i=0;i<N2;i++) { | | |
| | | descriptor() | | |
| | | } | | |
| | } | | | |
| | CRC_32 | | 32 | rpchof |
| } | | | | |

The elementary_PID is the stream identifier information, and the relevant description information of the stream is defined in descriptor(). The descriptor() of the DRM information stream may be defined as that of the DRM_Service_descriptor().

In the DRM_Info_section(), the definitions of other parameters are similar to those of the TS_rogram_map_section() and the CA_section().

The encapsulating of the DRM information in the transmission packet may be as defined in the PES, and thus, the corresponding stream_id needs to be defined for the DRM information, for example, the stream_id is set to 'DRM_info', particularly as shown in Table 8.

**Table 8 Encapsulating of DRM Information in Transmission Packet**

| Syntax | | | Number of Bits | Mnemonic |
|---|---|---|---|---|
| PES_packet(){ | | | | |
| | packet_start_code_prefix | | 24 | bslbf |
| | stream_id | | 8 | uimsbf |
| | PES_packet_length | | 16 | uimsbf |
| | if(stream_id!=program_stream_map | | | |
| | ... | | | |
| | } | | | |
| | else if (stream_id = = program_stream_map | | | |
| | ∥ stream_id = = private_stream_2 | | | |
| | ∥ stream_id = = ECM | | | |
| | ∥ stream_id = = EMM | | | |
| | ∥ stream_id = = program_stream_directory | | | |
| | ∥ stream_id = = DSMCC stream | | | |
| | ∥ stream_id = = ITU-T Rec. H.222.1 type E stream | | | |
| | ∥ stream_id = =DRM_info) { | | | |
| | | for (i=O;i<PES_packet_length;i++) { | | |
| | | PES_packet_data_byte | 8 | bslbf |
| | | } | | |
| | } | | | |
| | else if (steam id = = padding_stream){ ( | | | |
| | | for (i=0;i<PES packet_length;i++) { | | |
| | | padding_byte | 8 | bslbf |
| | | } | | |
| | } | | | |
| } | | | | |

In an example, it is assumed that the PID value of the information of the DRM control table of the device is a fixed value 0x4. The current DRM service information is defined into two stream types, one is a license information stream, and the other is a domain response information stream. The server sets the license information stream identifier to 100, and sets the identifier of the domain response information stream to 101.

The server records the relevant information of the two streams in the DRM_Info_section structure of the information of the DRM control table, which includes the stream identifiers and the DRM_Service_descriptor() of each stream. The relevant information of a certain steam is recorded in the DRM_Service_descriptor().

The terminal extracts the information of the DRM control table from the system stream according to the PID value, and extracts the relevant information of the two DRM information streams in the DRM_Info_section structure, so as to obtain that the basic stream having the stream identifier of 100 is the license information stream, and the basic stream having the stream identifier of 101 1 is the domain response information stream. Therefore, the terminal may respectively parse the relevant DRM service information from the two streams.

In the embodiment, the particular DRM service information is encapsulated in the PES packet. In another embodiment, the DRM service information may be encapsulated in a table information format. For example, the DRM service information is carried in the table information defined in the AVSDRM_Control_Info_section() format, and the stream identifier of the stream is obtained in the information of the DRM control table.

In the embodiment, the DRM service information is carried in the DRM information stream. In an embodiment, the DRM service information is encapsulated in a Descriptor structure, the Descriptor structure is loaded in the PMT or a conditional access table (CAT) information, and the PMT or the CAT is multiplexed in the Transport Stream. The Descriptor structure carries the Descriptor identifier information, and the Descriptor identifier information indicates that the information encapsulated in the Descriptor structure is the DRM service information.

The DRM service information is encapsulated in the descritptor structure, such that the DRM service information may be carried in other types of information stream (for example, PMT and CAT). In the AVS DRM standard, the AVSDRM_descriptor() is defined, and the definition of the syntax is as shown in Table 9.

**Table 9 Syntax of AVSDRM_descriptor()**

| Syntax | | | | Number of Bits | Mnemonic |
|---|---|---|---|---|---|
| AVSDRM_descriptor() { | | | | | |
| | descriptor_tag | | | 8 | uimsbf |
| | descriptor_length | | | 8 | uimsbf |
| | AVSDRM_Descriptor_ID | | | 32 | uimsbf |
| | AVSDRM_Data_length | | | 16 | uimsbf |
| | | for (i=0; i< N; i++) { | | | |
| | | | AVSDRM_Data | | |
| | | } | | | |
| | isSigned | | | 8 | uimsbf |
| | if (isSigned) | | | | |
| | | Signature | | | ByteArray |
| | | NumCerts | | 8 | uimsbf |
| | | for (i=0; i<numCerts;i++) { | | | |
| | | | CertType | 8 | uimsbf |
| | | | Certificate | | ByteArray |
| | | } | | | |
| | } | | | | |
| } | | | | | |

The meaning of the AVS DRM data field (AVSDRM_Data) is the AVS DRM data description protecting mechanism and the particular implementing rule, and currently does not refer to the DRM service information.

In the embodiment of the present invention, for one method, the service message information (for example, the information similar to the information defined by the AVSDRM_ServiceMessage_Container) is carried by using the existing DRMdescriptor, and for another method, a new descriptor type is separately designed, as shown in Table 10.

**Table 10 Syntax of Descriptor Type**

| Syntax | | | Number of Bits | Mnemonic |
|---|---|---|---|---|
| DRM_Service_descriptor() { | | | | |
| | descriptor_tag | | 8 | uimsbf |
| | descriptor_length | | 8 | uimsbf |
| | Message_Length | | 8 | uimsbf |
| | for (i=0; i< Message_Length; i++) { | | | |
| | | Service_Message_byte | 8 | uimsbf |
| | } | | | |
| } | | | | |

For the descriptor being the type of the DRM_Service_descriptor, the descriptor tag identifier needs to be defined, for example, the value may be defined to 64.

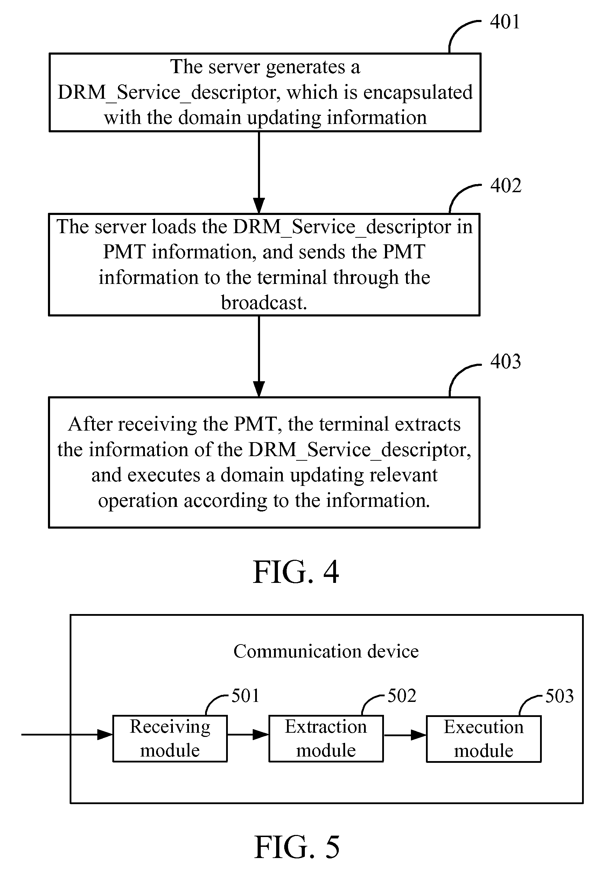

In an example, it is assumed that the server notifies the relevant terminal to execute the domain updating operation, and the particular steps are described the following, as shown in FIG. 4.

In Step 401, the server generates a DRM Service descriptor, which is encapsulated with the domain updating information, including an original domain identifier, a new domain identifier, a domain updating key, and other information.

In Step 402, the server loads the DRM_Service_descriptor in the PMT, and broadcasts the PMT to the terminal.

In Step 403, after receiving the PMT, the terminal extracts the information of the DRM_Service_descriptor. If the terminal judges that the domain of the terminal matches the original domain identifier in the domain updating information, the terminal completes the domain updating relevant operation.

In an embodiment, the DRM service information is encapsulated in an entitlement control information (ECM) structure or an entitlement manage information (EMM) structure, and the ECM or the EMM is multiplexed in the Transport Stream. For example, in a digital television system, the DRM service information is carried in the EMM or the ECM encapsulate.

In the MPEG SYS standard, the format of the ECM/EMM is not defined, and the particular format is self defined by the system manufacturers. For example, the subscriber requests to join the domain in the out-of-band manner. The server encapsulates the "join domain response" message in the EMM, and sends the EMM to the subscriber terminal.

For example, the EMM includes the following information.

| | | | |
|---|---|---|---|
| EMM{ | | | |
| | CARD-ID | 80 bits | uimsbf |
| | Device_id | 24 bits | uimsbf |
| | Product_id | 16 bits | uimsbf |
| | Message_length | 16 bits | bslbf |
| | ServiceMessage | 8*message_length bits | bslbf |
| } | | | |

After receiving the EMM, the terminal extracts the "join domain response" message and completes the subsequent operation of joining the domain.

Based on the same concept of the invention, the present invention further provides a communication device. Referring to FIG. 5, the communication device includes a receiving module 501, an extraction module 502, and an execution module 503. The receiving module 501 is adapted to receive a Transport Stream transmitted through a broadcast channel, in which the Transport Stream is encapsulated with DRM service information. The extraction module 502 is adapted to extract the DRM service information from the received Transport Stream. The execution module 503 is adapted to execute a corresponding DRM service operation according to the extracted DRM service information.

In an embodiment, the DRM information stream includes stream identifier information, and the extraction module 502 is further adapted to extract the DRM service information from the Transport Stream according to the stream identifier information.

The received Transport Stream further has an identifier information stream multiplexed therein, the identifier information stream includes stream identifier information and/or description information of the DRM information stream, and the extraction module 502 is further adapted to extract the stream identifier information and/or the description information from the identifier information stream, and extract the DRM service information from the Transport Stream according to the stream identifier information and/or the description information.

The extraction module 502 is further adapted to extract corresponding PES packet information or table information from the Transport Stream according to the stream identifier, and extract the DRM service information from the PES packet information or the table information.

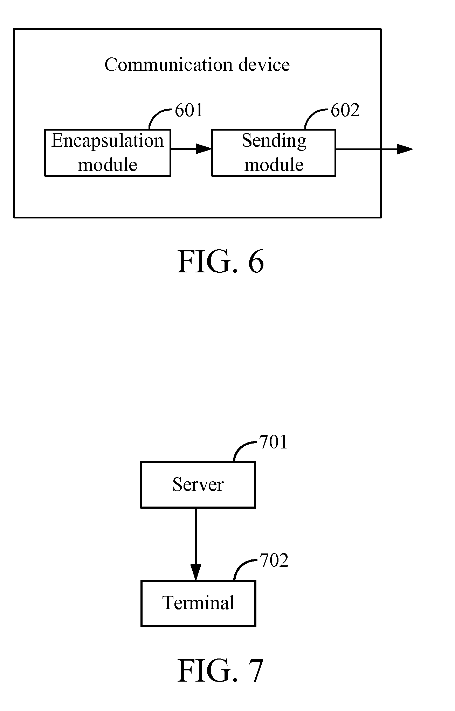

Based on the same concept of the invention, the present invention further provides another communication device. Referring to FIG. 6, the communication device includes an encapsulation module 601 and a sending module 602. The encapsulation module 601 is adapted to encapsulate DRM service information in a Transport Stream. The sending module 602 is adapted to transmit the Transport Stream encapsulated with the DRM service information through a broadcast channel.

In an embodiment, the encapsulation module 601 is further adapted to encapsulate the DRM service information in the DRM information stream, and multiplex the DRM information stream in the Transport Stream.

The encapsulation module 601 is further adapted to encapsulate the DRM service information in a Descriptor structure, load the Descriptor structure in PMT or CAT, and multiplex the PMT or CAT in the Transport Stream.

The encapsulation module 601 is further adapted to encapsulate the DRM service information in an ECM or EMM structure, and multiplex the ECM or the EMM in the Transport Stream.

Based on the same concept of the invention, the present invention further provides a communication system. Referring to FIG. 7, the communication system includes a server 701 and a terminal 702. The server 701 is adapted to encapsulate a Transport Stream with DRM service information, and send the Transport Stream through a broadcast channel. The terminal 702 is adapted to receive the Transport Stream sent from the server 701, and extract the DRM service information from the received Transport Stream, and is also adapted to execute a corresponding DRM service operation according to the DRM service information.

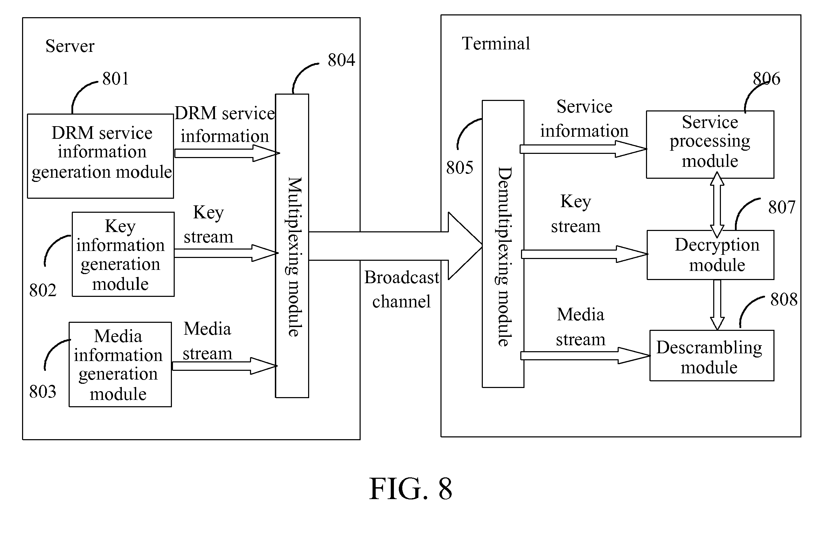

In an example, referring to FIG. 8, the server in the communication system includes a DRM service information generation module 801, a key information generation module 802, a media information generation module 803, and a multiplexing module 804. The multiplexing module 804 multiplexes a DRM service information stream, a key stream, a media stream to generate the Transport Stream, and transmits the Transport Stream to the terminal through the broadcast channel. The information streams are logically classified, and in the Transport Stream, the DRM service information and the key may be the same basic stream.

The terminal includes a demultiplexing module 805, a service processing module 806, a decryption module 807, and a descrambling module 808. The demultiplexing module 805 parses a system stream, and respectively sends each parsed information stream to the service processing module 806, the decryption module 807, and the descrambling module 808 for being processed. The service processing module 806 parses the service information, and controls the agent to execute relevant operations according to the service information, including performing a relevant information interaction with the decryption module 807, for example, after the service processing module 906 extracts key information from the service information, the decryption module 807 completes a relevant decryption operation. The procedure that the service processing module 806 executes a license validation may be completed by the decryption module.

The decryption module 807 may decrypt a content scrambling key in the key stream, and the descrambling module 808 descrambles the received scrambled media stream, so as to obtain a plain text of a digital content.

Persons of ordinary skill in the art should understand that all or a part of the steps of the method according to the embodiments of the present invention may be implemented by a program instructing relevant hardware. The program may be stored in a computer readable storage medium. The storage medium may include a read-only memory (ROM), a random-access memory (RAM), a magnetic disk, or an optical disk.

In the present invention, the server encapsulates the Transport Stream with the DRM service information, and sends the Transport Stream to the terminal through the broadcast channel. The terminal receives the Transport Stream, and extracts the DRM service information from the Transport Stream. The terminal executes the corresponding DRM service operation according to the DRM service information. Therefore, various DRM services, including relevant services of the domain, are realized under the broadcast communication environment. Through the method according to the present invention, the DRM modification may be performed on the currently widely used digital television system, such that abundant DRM services are developed in the digital television system, and more service selections are brought to operators and consumers.

It will be apparent to persons skilled in the art that various modifications and variations can be made to the present invention without departing from the scope of the invention. In view of the foregoing, it is intended that the present invention cover modifications and variations of this invention provided they fall within the scope of the following claims and their equivalents.

## Claims

1. A method for realizing a digital rights management, DRM, service under a broadcast environment, comprising:
receiving a Transport Stream transmitted through a broadcast channel, wherein the Transport Stream is encapsulated with DRM service information;
extracting the DRM service information from the Transport Stream; and
executing a corresponding DRM service operation according to the DRM service information.

2. The method according to claim 1, wherein the DRM service information is encapsulated in a DRM information stream, and the DRM information stream is multiplexed in the Transport Stream.

3. The method according to claim 2, wherein the DRM information stream comprises stream identifier information, and the DRM service information is extracted from the Transport Stream according to the stream identifier information.

4. The method according to claim 3, wherein an identifier information stream is multiplexed in the Transport Stream, the identifier information stream comprises stream identifier information and/or description information of the DRM information stream, the stream identifier information and/or the description information is extracted from the identifier information stream, and the DRM service information is extracted from the Transport Stream according to the stream identifier information and/or the description information.

5. The method according to claim 3, wherein the extracting the DRM service information from the Transport Stream according to the stream identifier information comprises: extracting corresponding packet element stream, PES, packet information or table information from the Transport Stream according to the stream identifier information, and extracting the DRM service information from the PES packet information or the table information.

6. A method for realizing a digital rights management, DRM, service under a broadcast environment, comprising:
encapsulating DRM service information in a Transport Stream; and
transmitting the Transport Stream through a broadcast channel, so that a terminal executes a corresponding DRM service operation according to the DRM service information in the Transport Stream.

7. The method according to claim 6, wherein the DRM service information is encapsulated in a DRM information stream, and the DRM information stream is multiplexed in the Transport Stream.

8. The method according to claim 6, wherein the DRM service information is encapsulated in a Descriptor structure, the Descriptor structure is loaded in program map table, PMT, or conditional access table, CAT, , and the PMT or CAT is multiplexed in the Transport Stream.

9. The method according to claim 6, wherein the DRM service information is encapsulated in an entitlement control message, ECM, or entitlement management message, EMM, structure, and the ECM or the EMM is multiplexed in the Transport Stream.

10. The method according to any one of claims 6 to 9, wherein the DRM service information comprises one selected from a group consisting of registration information, joining domain information, leaving domain information, domain updating information, license request information, and any combination thereof.

11. A communication device, comprising:
a receiving module, adapted to receive a Transport Stream transmitted through a broadcast channel, wherein the Transport Stream is encapsulated with digital rights management, DRM, service information;
an extraction module, adapted to extract the DRM service information from the Transport Stream; and
an execution module, adapted to execute a corresponding DRM service operation according to the DRM service information.

12. The communication device according to claim 11, wherein the DRM information stream comprises stream identifier information, and the extraction module is further adapted to extract the DRM service information from the Transport Stream according to the stream identifier information.

13. The communication device according to claim 12, wherein an identifier information stream is further multiplexed in the Transport Stream, the identifier information stream comprises stream identifier information and/or description information of the DRM information stream, and the extraction module is further adapted to extract the stream identifier information and/or the description information from the identifier information stream, and extract the DRM service information from the Transport Stream according to the stream identifier information and/or the description information.

14. The communication device according to claim 13, wherein the extraction module is further adapted to extract corresponding packet element stream, PES, packet information or table information from the Transport Stream according to the stream identifier, and extract the DRM service information from the PES packet information or the table information.

15. A communication device, comprising:
an encapsulation module, adapted to encapsulate digital rights management, DRM, service information in a Transport Stream; and
a sending module, adapted to transmit the Transport Stream through a broadcast channel.

16. The communication device according to claim 15, wherein the encapsulation module is further adapted to encapsulate the DRM service information in a DRM information stream, and multiplex the DRM information stream in the Transport Stream.

17. The communication device according to claim 15, wherein the encapsulation module is further adapted to encapsulate the DRM service information in a Descriptor structure, load the Descriptor structure in program map table, PMT, or conditional access table, CAT, information, and multiplex the PMT or CAT in the Transport Stream.

18. The communication device according to claim 15, wherein the encapsulation module is further adapted to encapsulate the DRM service information in an entitlement control message, ECM, or entitlement management message, EMM, structure, and multiplex the ECM or the EMM in the Transport Stream.
